# EUROPÄISCHE PATENTANMELDUNG

(11) **EP 1 155 799 A1**
(43) Veröffentlichungstag der Anmeldung: **21.11.2001**
(21) Anmeldenummer: 00110580.8
(22) Anmeldetag: 18.05.2000
(51) Int. Cl.: B29C 44/04, B29C 44/58

(54) **Verfahren zur Herstellung eines aus Partikelschaum wie EPP oder EPS gebildeten Schaumkörpers in einem Formteilautomat**

(71) Anmelder: Jacob Formschaumtechnik GmbH, Kunststoff-Verarbeitung mit Formenbau, 90556 Cadolzburg-Wachendorf (DE)
(72) Erfinder: Wolfgang Schedel, c/o Firma AUTOMA MULTI STYRENE, Sebenza, Edenvale, P.O Box 361 (ZA); Peter Kapischke, 34537 Bad Wildungen (DE); Christof Kurth, 95444 Bayreuth (DE); Karl Otto Köster, 74182 Obersulm (DE)
(74) Vertreter: Zech, Stefan Markus Dipl.-Phys.

(57) **Zusammenfassung**

Es wird ein Verfahren zum Herstellen eines aus Partikelschaum, wie EPP oder EPS gebildeten Schaumkörpers in einem Formteilautomaten vorgeschlagen. Das Verfahren umfaßt die folgenden Schritte:
einen Füllschritt, in dem vorgeschäumte Partikel (13) in eine Form des Formteilautomaten (12) eingebracht werden, um eine die Form im wesentlichen ausfüllende Artikelschüttung zu erzielen und
einen Aufquellschritt, in dem die Partikel zu einem intermediären Netzwerk verschweißen. Weiterhin ist ein Verhautungsschritt vorgesehen, bei dem während und/oder nach dem Verschweißen der Partikel zu einem intermediären Netzwerk Heißdampf über Führungsmittel (17) so geführt wird, daß der Heißdampf zur Ausbildung einer Außenhaut am Schaumkörper flächig an die Oberfläche des intermediären Netzwerks gelangt.

## Beschreibung

Die Erfindung betrifft ein Verfahren zum Herstellen eines Partikelschaum wie EPP oder EPS gebildeten Schaumkörpers in einem Formteilautomaten gemäß dem Oberbegriff des Anspruchs 1 sowie einen Formteilautomaten gemäß dem Oberbegriff des Patentanspruchs 6.

Aus Partikelschaum gebildete Schaumkörper bestehen aus einem intermediären Netzwerk von miteinander verschweißten, aufgeschäumten Partikeln. Derartige Schaumkörper weisen eine schon in optischer Hinsicht unbefriedigende Oberfläche auf. Darüber hinaus bilden sich von der Oberfläche her leicht in den Schaumkörper eindringende Rißstellen. Weiterhin können auch Flüssigkeiten von einer derart unbehandelten Oberfläche nur allzu leicht in das intermediäre Netzwerk eindringen und für den Schaumkörper selbst, für ein darin eingebrachtes Gut oder in anderer Weise schädigend wirken. Beispielsweise hat sich gezeigt, daß Getriebeöl in Schaumkörper geringer und mittlerer Dichte ohne weiteres eindringt und je nach Stärke des Schaumkörpers durch das intermediäre Netzwerk hindurchsickert. Dient der Schaumkörper als Behältnis, kann ein solcher Öldurchtritt unerwünscht sein. Ganz generell wirkt ein Schaumkörper, bei dem das intermediäre Netzwerk an seiner Oberfläche erkennbar ist, oftmals minderwertig.

Um hier Abhilfe zu schaffen, sind nach dem Stand der Technik mehrere Lösungen bekannt. So können beispielsweise Kunststoff-Folien auf den Schaumkörper aüfkaschiert werden, was jedoch aufwendig ist und gleichzeitig die Recyclingfähigkeit des Produktes verschlechtert. In einer weiteren Lösung ist gemäß der DE 43 08 764 A 1 vorgesehen, die Oberfläche des Schaumstoffkörpers dadurch zu versiegeln, daß dort ein thermisches Nachverdichten des Schaumstoffes durchgeführt wird. Konkret wird in einem zweiten Arbeitsschritt nach dem Ausformen des Schaumkörpers mittels eines Heißstempels die oberste Schicht angeschmolzen und dadurch verdichtet. Nachteilig ist hier jedoch der höhere Arbeitsaufwand. Darüber hinaus geht durch das Anschmelzen die Elastizität der obersten Schaumstoffschicht verloren, so daß die Oberfläche leicht brüchig wird.

Die Aufgabe der vorliegenden Erfindung besteht ausgehend von dem zuletzt geschilderten Stand der Technik darin, eine Verhautung bei einem Schaumstoffkörper auf kostengünstigere Weise zu erreichen, wobei gleichzeitig der unerwünschte Nebeneffekt einer brüchiger werdenden Oberfläche vermieden werden soll.

Diese Aufgabe wird in verfahrenstechnischer Hinsicht mit den Merkmalen des Anspruches 1 und in vorrichtungstechnischer Hinsicht mit einem Formteilautomaten gemäß den Merkmalen des Anspruches 6 gelöst. Vorteilhafte Ausgestaltungen sind in den Unteransprüchen angegeben.

Ein Kerngdanke des erfindungsgemäßen Verfahrens besteht darin, während oder nach dem Aufquellen der vorgeschäumten Partikel in der Form des Formteilautomaten einen Verhautungsschritt durchzuführen. Erfindungsgemäß wird bei diesem Verhautungsschritt während und/oder nach dem Verschweißen der Partikel zu einem intermediärem Netzwerk Heißdampf über Führungsmittel so zugeführt, daß der Heißdampf zur Ausbildung einer Außenhaut am Schaumkörper flächig, zumindest in einem flächigen äußerst engmaschigen Raster mit einer im Vergleich zum Partikelabstand der Netzstruktur deutlich keineren Maschenweite an die Oberfläche des intermediären Netzwerks gelangt. Dabei ist Verhautung vorliegend so zu verstehen, daß ein Durchtreten beispielsweise von Flüssigkeit unter Umständen nicht ganz verhindert, jedoch wesentlich erschwert wird. Gleichzeitig werden die an der Oberfläche herkömmlicherweisee vorhandenen Inhomogenitäten der intermediären Netzstruktur vergleichmäßigt; es entsteht eine wesentlich homogenere Oberflächenstruktur, der allerdings aufgrund der hier zur Anwendung kommenden Dampführungsmittel ggf. erneut eine bestimmte von der des intermediären Netzwerkes völlig verschiedene Oberflächenstruktur aufgeprägt wird. Die Oberfläche wird mit dem erfindungsgemäßen Verfahren ggf. leicht verdichtet, behält jedoch - anders als beim gattungsbildenden Stand der Technik - ihre Elastizität bei. Die Oberfläche ist daher gegen Rißbildungen oder Beschädigungen im Vergleich zu einem unverhauteten Schaumkörper wesentlich resistenter. Das erfindungsgemäße Verfahren bewirkt auf kostengünstige Weise eine Oberflächenveredelung bei einem Schaumkörper, wobei lediglich das Schäumverfahren entsprechend modifiziert wird. Das Einbringen oder Aufbringen weiterer Materialien wie einer Oberflächenfolie, einem Oberflächenfilm etc. kann vermieden werden. Auch ist ein separater Arbeitsschritt wie die Oberflächenveredelung mit einem Prägestempel nicht notwendig.

In einer vorteilhaften Ausgestaltung des Verfahrens wird der Heißdampf mindestens während des Verhautungsschrittes durch entsprechende Führungsmittel an der dem Schaumkörper zugewandten Innenseite der Form so geleitet, daß dem Heißdampf eine zur Oberfläche des intermediären Netzwerkes parallele Ausbreitungskomponente aufgeprägt wird. Hierdurch wird zum einen erreicht, daß sich der Heißdampf flächig über die Oberfläche verteilt. Zum anderen ist die Wirkung des Heißdampfes an der Oberfläche bzw. an oberflächennahen Schichten des sich ausbildenden Schaumkörpers durch diese Maßnahmen wesentlich intensiver, da der Dampf sich - anders als beim Stand der Technik - nicht sofort im Volumen des intermediären Netzwerkes verliert. Die einsetzende Verhautung unterstützt den Effekt der Dampfleitung entlang der Oberfläche des intermediären Netzwerkes zusätzlich.

In einer bevorzugten Ausgestaltung wird der Prozeß so gesteuert, daß im Verhautungsschritt die Form verschlossen wird und der Heißdampf dann als Autoklavdampf unter Erhöhung des Drucks in der Form eingebracht wird. Hierdurch wird eine besonders wirksame Verschweißung der Partikel an der Oberfläche des Schaumkörpers erreicht.

Das erfindungsgemäße Verfahren kann wahlweise eingesetzt werden, um die gesamte Oberfläche des sich auszubildenden Schaumkörpers in der beschriebenen Weise zu verhauten. Alternativ können durch entsprechende Führung des Heißdampfes auch nur bestimmte Teilstücke der Oberfläche in der angegeben Weise behandelt werden.

Nach einem weiteren Aspekt der vorliegenden Erfindung wird ein Formteilautomat nach den Merkmalen des Anspruches 6 vorgeschlagen. Dieser Formteilautomat weist wie herkömmliche Formteilautomaten eine Mehrzahl beabstandet angeordneter Dampfeinlässe auf. Zusätzlich zu diesen lokalen, beabstandet angeordneten Dampfeinlässen, die einen großen Dampfdurchlaß für ein rasches Aufschäumen des Schaumkörpers gestatten, sind erfindungsgemäß an oder in der Form Führungsmittel angeordnet, die eine flächige Dampfeinwirkung zwischen der Oberfläche des sich ausbildenden Schaumkörpers und der Form bewirken. Die Führungsmittel sind so ausgebildet, daß der Heißdampf möglichst homogen verteilt an die Oberfläche des sich ausbildenden Schaumkörpers geführt wird.

In einer bevorzugten Weiterbildung sind die Führungsmittel derart ausgebildet und angeordnet, daß eine Heißdampfausbreitung zwischen der Innenseite der Form und der Oberfläche des intermediären Netzwerkes mit einer zur Innenwand der Form parallelen Aufbereitungskomponente erfolgt. Wie bereits vorstehend erläutert, wird der Verhautungsprozeß einerseits durch die flächige Verteilung des Heißdampfes über die Oberfläche des intermediären Netzwerkes als auch durch die Erhöhung der Intensität des Heißdampfes bei Bewegung parallel zur Oberfläche gefördert. Die Führung des Heißdampfes mit einer zur Oberfläche des intermediären Netzwerkes bzw. der Innenwand der Form parallelen Bewegungskomponente wird bei der vorliegenden Erfindung als besonders vorteilhaft angesehen.

In einer konkreten Ausgestaltung ist zwischen der oder den Wandungen der Form und der Oberfläche des sich ausbildenden Schaumkörpers ein Dampfleitblech mit einer Vielzahl von Öffnungen in einem vorbestimmten Abstand zu der oder den Wandungen der Form angeordnet.

In einer weiter bevorzugten Ausgestaltung können die Öffnungen im Dampfleitlbech durch Ausstanzungen gebildet sein, die nach einer Seite des Dampfleitbleches hin ausgestellt sind, wobei die ausgestellten Ausstanzungen gleichzeitig als Abstandhalter und/oder Dampfleitmittel im Zusammenspiel mit der Form dienen.

Allgemein bevorzugt wird bei der vorliegenden Erfindung ein Formteilautomat, bei dem die Führungsmittel für die zweite Dampfkomponente mit den Dampfeinlässen in Verbindung stehen, so daß ausgehend von den Dampfeinlässen eine Dampfausbreitung zwischen der Oberfläche des sich ausbildenden Schaumkörpers und der Form bewirkt wird.

Die Erfindung wird nachsehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Fig. 1: eine Ausführungsform des erfindungsgemäßen Formteilautomaten mit darin eingebrachten vorgeschäumten Partikeln,
- Fig. 2: den mit x bezeichneten Teilausschnitt des in Fig. 1 dargestellten Formteilautomaten,
- Fig. 3: eine Ausführungsform eines Dampfleitblechs als Führungsmittel für den oberflächenwirksamen Heißdampf,
- Fig. 4: eine Ausführungsform eines in einem Formteilautomaten nach Fig. 1 herstellbaren Schaumkörpers.

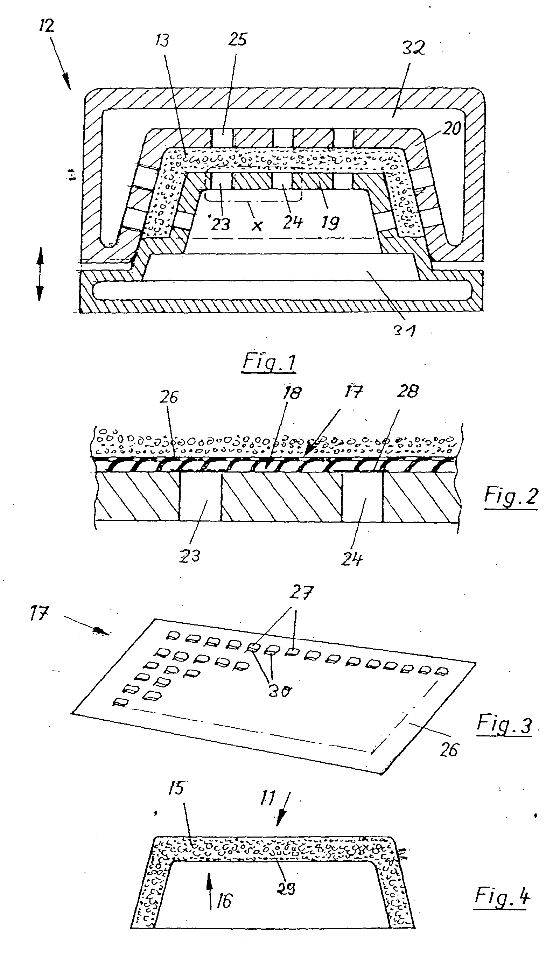

In Fig. 1 ist eine Ausführungsform eines Formteilautomaten 12 mit eingebrachten vorgeschäumten Partikeln 13 zur Ausbildung eines Schaumkörpers 11 in einer Schnittansicht dargestellt. Die vorgeschäumten Partikel 13 können mittels Heißdampf zu einem intermediären Netzwerk verschweißt werden. Der Formteilautomat 12 umfaßt eine Form mit zwei Formhälften 19, 20. Jede Formhälfte 19, 20 weist Kammern 31, 32 auf, über die Heißdampf zu- oder abgeführt werden kann.

Über Dampfeinlässe 23 bis 25 kann der Heißdampf der durch die beiden Formhälften 19, 20 gebildeten Form zugeführt bzw. abgeführt werden. Um ein Eintreten der vorgeschäumten Partikel 13 in die Dampfeinlässe 23 bis 25 zu vermeiden, sind diese mit einem Gitter 28 überdeckt. Bei der hier dargestellten Ausführungsform, in der die noch näher zu erläuternden Führungsmittel 17 für den Heißdampf aus einem Dampfleitblech 26 gebildet sind, können die Gitter 28 auch entfallen. Ein Eintreten der Partikel 13 in die Dampfeinlässe 23 bis 25 wird bei der hier gezeigten Ausführungsform allein durch das Dampfleitblech 26 verhindert.

Die Funktion und Wirkungsweise des Dampfleitblechs 26 als Führungsmittel 17 für den Heißdampf wird nachfolgend unter Bezugnahme auf die Fig. 2 und 3 näher erläutert. In Fig. 2 ist der Ausschnitt x aus Fig. 1 vergrößert dargestellt, wobei das Dampfleitblech 26 in der Gesamtansicht nach Fig. 1 aus Gründen der Übersichtlichkeit nicht dargestellt ist.

Das Dampfleitblech 26 ist mit seiner der Formhälfte 19 zugewandten Oberseite in Fig. 3 in perspektivischer Ansicht veranschaulicht. Das flächig ausgedehnte Dampfleitblech 26 umfaßt ein Raster von regelmäßig angeordneten Öffnungen 30, wobei die Öffnungen 30 durch nach oben ausgestellte Ausstanzungen 27 gebildet sind. Die nach oben ausgestellten Ausstanzungen 27 dienen als Abstandshalter zur Innenwand 18 der Formhälfte 19. Durch diese Beabstandung breitet sich durch die Dampfeinlässe 23, 24 eingeführter Heißdampf zwischen dem Dampfleitblech 26 und der Innenwand 18. der Form flächig aus und tritt über die Öffnungen. 30 in einer sehr gleichmäßigen Verteilung an die Oberfläche 16 des sich ausbildenden Schaumkörpers 11 aus.

Wie in Fig. 4 nur ganz schematisch angedeutet, bildet das intermediäre Netzwerk 15 des Schaumkörpers 11 durch den flächig an die Oberfläche 16 geführten Heißdampf erfindungsgemäß eine dünne, elastische Außenhaut 29, welche die Widerstandsfähigkeit des Schaumkörpers 11 erhöht und Flüssigkeitsdurchtritt hemmt. Das beschriebene Verfahren ist nicht auf die Anwendung bei expandierbarem Polystyrol oder auf die Form des Schaumkörpers beschränkt. Vielmehr kann es bei nahezu jeder beliebigen Art von Schaumkörper, der aus expandierbarem Partikelschaum gebildet wird, zur Anwendung gelangen.

### Bezugszeichenliste

- 11: Schaumkörper
- 12: Formteilautomat
- 13: Partikel
- 15: intermediäres Netzwerk
- 16: Oberfläche
- 17: Führungsmittel
- 18: Innenwand
- 19, 20: Formhälften
- 23 - 25: Dampfeinlässe
- 26: Dampfleitblech
- 27: Ausstanzungen
- 28: Gitter
- 29: Außenhaut
- 30: Öffnungen
- 31, 32: Kammern

## Patentansprüche

1. Verfahren zum Herstellen eines aus Partikelschaum, wie EPP oder EPS gebildeten Schaumkörpers (11) in einem Formteilautomaten (12), umfassend die folgenden Schritte:
- einen Füllschritt, in dem vorgeschäumte Partikel (13) in eine Form (14) des Formteilautomaten (12) eingebracht werden, um eine die Form (14) im wesentlichen ausfüllende Partikelschüttung zu erzielen und
- einem Aufquellschritt, in dem im Volumen wirkender Heißdampf ggf. alternierend durch die Form (14) zum Aufquellen der Partikel (13) hindurchgeleitet wird, so daß die Partikel (13) zu einem intermediären Netzwerk (15) verschweißen,
**gekennzeichnet durch,**
einen Verhautungsschritt, bei dem während und/oder nach dem Verschweißen der Partikel (13) zu einem intermediären Netzwerk (15) Heißdampf über Führungsmittel (17) so geführt wird, daß der Heißdampf zur Ausbildung einer Außenhaut (29) am Schaumkörper (11) flächig an die Oberfläche (16) des intermediären Netzwerks (15) gelangt.

2. Verfahren nach Anspruch 1,
**dadurch gekennzeichnet,**
**daß** der Heißdampf durch die Führungsmittel (17) so geleitet wird, daß eine Heißdampfausbreitung zwischen der Innenseite (18) der Form (14) und der Oberfläche (16) des intermediären Netzwerkes (15) mit einer zur Innenwand (18) parallelen Ausbreitungskomponente erfolgt.

3. Verfahren nach Anspruch 1 oder 2,
**dadurch gekennzeichnet,**
**daß** der Verhautungsschritt bei Einleitung von Heißdampf bei ansonsten geschlossener Form (14) unter Druckerhöhung (Autoklavdampf) durchgeführt wird.

4. Verfahren nach einem der Ansprüche 1 bis 3,
**dadurch gekennzeichnet,**
**daß** im Verhautungsschritt die gesamte Oberfläche (16) des Schaumkörpers (11) mit dem zur Oberfläche (16) parallel geführten Heißdampf beaufschlagt wird.

5. Verfahren nach einem der Ansprüche 1 bis 3,
**dadurch gekennzeichnet,**
**daß** im Verhautungsschritt nur ein bestimmter Bereich der Oberfläche (16) des Schaumkörpers (11) mit dem zur Oberfläche (16) parallel geführten Heißdampf beaufschlagt wird.

6. Formteilautomat zur Herstellung eines aus Partikelschaum, wie EPP oder EPS, gebildeten Schaumkörpers (11),
- umfassend eine Form (14) mit Wandungen (19 bis 22), welche die Form (14) begrenzen und
- eine Mehrzahl beabstandet angeordneter Dampfeinlässe (23 bis 25) zum Einlaß von Heißdampf,
**dadurch gekennzeichnet,**
**daß** an oder in der Form (14) Führungsmittel (17) angeordnet sind, die eine flächige Dampfeinwirkung zwischen der Oberfläche (16) des sich ausbildenden Schaumkörpers (11) und der Form (14) bewirken.

7. Formteilautomat nach Anspruch 6,
**dadurch gekennzeichnet,**
**daß** die Führungsmittel (17) derart ausgebildet und angeordnet sind, daß eine Heißdampfausbreitung zwischen der Innenseite (18) der Form (14) und der Oberfläche (16) des intermediären Netzwerkes (15) mit einer zur Innenwand (18) parallelen Ausbreitungskomponente erfolgt.

8. Formteilautomar nach Anspruch 6 oder 7,
**dadurch gekennzeichnet,**
**daß** innen an der oder den Innenwänden (18) mindestens einer Formhälfte (19, 20) ein Dampfleitblech (26) mit einer Vielzahl von Öffnungen (30) in einem vorbestimmten Abstand zur Innenwand (18) der zugeordneten Formhälfte (19, 20) angeordnet ist.

9. Formteilautomat nach Anspruch 8,
**dadurch gekennzeichnet,**
**daß** die Öffnungen (30) im Dampfleitlbech (26) durch nach einer Seite hin ausgestellte Ausstanzungen (27) gebildet sind, die gleichzeitig als Abstandshalter und/oder Dampfleitmittel dienen.

10. Formteilautomat nach einem der Ansprüche 6 bis 9,
**dadurch gekennzeichnet,**
**daß** die Führungsmittel (17) mit den Dampfeinlässen (23 bis 25) in Verbindung stehen, so daß ausgehend von den Dampfeinlässen eine Heißdampfausbreitung zwischen der Oberfläche (16) des sich ausbildenden Schaumkörpers (11) und der Form (14) bewirkt wird.
